# EUROPÄISCHE PATENTSCHRIFT

(11) **EP 0 521 050 B1**
(45) Veröffentlichungstag und Bekanntmachung des Hinweises auf die Patenterteilung: **02.06.1999**
(21) Anmeldenummer: 91906399.0
(22) Anmeldetag: 18.03.1991
(51) Int. Cl.: F01N 3/18, F02D 41/14

(54) **VERFAHREN UND VORRICHTUNG ZUR STEUERUNG EINES VERBRENNUNGSMOTORS UNTER EINBEZIEHUNG DER AKTUELLEN TEMPERATUR EINES NACHGESCHALTETEN KATALYSATORS**
PROCESS AND DEVICE FOR CONTROLLING AN INTERNAL COMBUSTION ENGINE IN FUNCTION OF THE ACTUAL TEMPERATURE OF A DOWNSTREAM CATALYST
PROCEDE ET DISPOSITIF PERMETTANT DE COMMANDER UN MOTEUR A COMBUSTION INTERNE EN FONCTION DE LA TEMPERATURE EFFECTIVE D'UN CATALYSEUR INTERCALE EN AVAL

(30) Priorität: 19.03.1990 DE 4008779; 07.02.1991 DE 4103747
(43) Veröffentlichungstag der Anmeldung: 07.01.1993
(73) Patentinhaber: Emitec Gesellschaft für Emissionstechnologie mbH, 53797 Lohmar (DE)
(72) Erfinder: MAUS, Wolfgang, D-5060 Bergisch Gladbach 1 (DE); SWARS, Helmut, D-5060 Bergisch Gladbach 1 (DE); BRÜCK, Rolf, D-5063 Overath (DE)
(74) Vertreter: Kahlhöfer, Hermann, Dipl.-Phys.
(86) Internationale Anmeldenummer: EP9100519
(87) Internationale Veröffentlichungsnummer: WO9114856

(56) Entgegenhaltungen:
- EP-B- 0 245 737
- EP-B- 0 245 738
- DE-A- 2 410 417
- Patent Abstracts of Japan, Band 5, Nr. 127 (M-83), 15. August 1981; & JP-A-56/64139 (FUJI) 1. Juni 1981
- Patent Abstracts of Japan, Band 12, Nr. 83 (M-677), 16. März 1988; & JP-A-62/223427 (NISSAN) 1. Otober 1987
- Patent Abstracts of Japan, Band 12, Nr. 251 (M-718) 15. Juli 1988; & JP-A-63/38648 (DAIHATSU) 19. Februar 1988
- Patent Abstracts of Japan, Band 9, Nr. 139 (M-387), 14. Juni 1985; & JP-A-60/19939 (FUJITSU) 1. Februar 1985
- Patent Abstracts of Japan, Band 13, Nr. 392 (M-865), 30. August 1989; & JP-A-1/139906 (BABCOCK HITACHI) 1. Juni 1989
- Patent Abstracts of Japan, Band 12, Nr. 247 (M-717), 13. Juli 1988; & JP-A-63/34424 (HITACHI) 15. Februar 1988
- Patent Abstracts of Japan, Band 13, Nr. 559 (M-905), 12. Dezember 1989; & JP-A-1/232106 (NISSAN) 18. September 1989
- Patent Abstracts of Japan, Band 3, Nr. 144 (M-082), 28. November 1979; & JP-A-54/121324 (TOYOTA) 20. September 1979
- Patent Abstracts of Japan, Band 13, Nr. 67 (M-798), 15. Februar 1989; & JP-A-63/270244 (FUJITSU) 8. November 1988
- Bosch "Technische Unterrichtung", 1987, 72, 2020, KH/VDT-09.85-De, Seiten 26 und 27

## Beschreibung

Die vorliegende Erfindung betrifft ein Verfahren zur Steuerung eines Verbrennungsmotors unter Einbeziehung der aktuellen Temperatur eines nachgeschalteten Katalysators und eine hierfür geeignete Vorrichtung.

Entsprechend den in vielen Ländern immer strenger werdenen Umweltschutzvorschriften werden inzwischen viele Verbrennungsmotoren, insbesondere bei Kraftfahrzeugen, mit einem Katalysator ausgestattet. Es handelt sich im allgemeinen um wabenähnliche Körper, welche eine Vielzahl von Kanälen aufweisen, die vom Abgas durchströmt werden. Als Trägerkörper für das eigentliche katalytisch aktive Material sind viele verschiedene Ausführungen bekannt, insbesondere metallische Katalysatorträger, wie sie beispielsweise in der EP-B-0 245 737 oder der EP-B-0 245 738 beschrieben sind.

Zur Steuerung moderner Verbrennungsmotoren werden inzwischen komplexe Motorsteuerungen eingesetzt, welche aus einer Vielzahl von Meßwerten, beispielsweise der Temperatur, dem Ansaugdruck, der Drehzahl, der Stellung des Gaspedals etc. mit Hilfe komplexer Programme Steuerdaten errechnen, welche dann verschiedene Steuerelemente am Verbrennungsmotor, beispielsweise eine Kraftstoffeinspritzpumpe, die Zündung, Luftklappen etc. steuern.

Wie in der JP-A 62-223 427, der JP-A 56-64139 und einigen anderen Dokumenten beschrieben, wurden auch nachträglich in einen Katalysator eingesehte Temperaturfühler zur Messung der Katalysatortemperatur zur Verarbeitung in einer Motorsteuerung verwendet. Die tatsächliche Temperatur der Wände eines metallischen Katalysatorträgerkörpers kann so aber nicht genan gemessen werden.

Die nach dem Stand der Technik hierfür verwendeten Motorsteuerungen und Programme berücksichtigen, daß ein dem Motor nachgeschalteter Katalysator zur Vermeidung von Beschädigungen des Trägers und vor allem des katalytisch aktiven Materials bestimmte Maximaltemperaturen in keinem Betriebszustand überschreiten soll. Um dies sicherzustellen, müssen im Motorsteuerungsprogramm bestimmte Bedingungen erfüllt werden, was jedoch bei manchen Betriebszuständen dazu führt, daß der Motor nicht in einem für die Emissionswerte, die Leistung, das Drehmoment und/oder den Krafstoffverbrauch optimalen Steuerbereich gehalten wird, obwohl der Katalysator tatsächlich noch weit von seiner maximal zulässigen Betriebstemperatur entfernt ist.

Aufgabe der vorliegenden Erfindung ist es, die Einschränkungen der Motorsteuerungen nach dem Stand der Technik zum Schutze des Katalysators vor Übertemperatur so weit wie möglich zu begrenzen, um den Motor beim Betrieb häufiger in einem für den Kraftstoffverbrauch, die Leistung, das Drehmoment und/oder die Schadstoffemission optimierten Zustand halten zu können.

Zur Lösung dieser Aufgabe dient ein verfahren zur Steuerung eines verbrennungsmotors mit einer Motorsteuerung, welche eine Vielzahl von Meßwerten über Meßleitungen erhält und verarbeitet, in Steuerdaten für den Betrieb des Motors umwandelt und über Motorzuleitungen an den Motor weiterleitet, z. B. zu Steuerung der Kraftstoffeinspritzung, der Luftzufuhr, der Zündung etc., dadurch gekennzeichnet, daß die tatsachliche Temperatur der metallischen Katalysatorträger-Wände eines dem Motor nachgeschalteten aus gewickelten, geschichten oder verschlungenen Blechlagen aufgebauten Katalysators mittels mindestens eines parallel zu den einzelnen Blechlagen verlaufenden, mit diesen gewickelten, geschichteten oder verschlungenen und innig mit diesen verbundenen Temperaturfuhlers direkt gemessen, der Motorsteuerung direkt oder nach vorheriger Verarbeitung über mindestens eine Datenleitung zugeführt und dort zusammen mit den anderen Meßwerten verarbeitet wird. Unter direkter Messung ist dabei die Messung der Temperatur der Wände des Katalysator-Trägerkörpers zu verstehen. Die erfindungsgemäße Lösung hat den vorteil, daß die Auslegung der Motorsteuerung nicht mehr in dem bisheriger Maße von vorher in aufwendigen Versuchen gewonnenen Ergebnissen zum Temperaturverhalten des Katalysators beim jeweiligen Anlagentyp unter den verschiedensten Betriebsbedinungen abhängt. Da die tatsächliche Katalysatortemperatur als Meßwert zur Verfügung steht, brauchen keine aus Versuchen ermittelten Sicherheitsreserven bei der Motorsteuerung mehr berücksichtigt zu werden. Insbesondere kann die Motorsteuerung vorrangig für z. B. eine Optimierung des Kraftstoffverbrauchs ausgelegt werden, wobei sie so lange keinen Einschränkungen unterworfen ist, wie die tatsächliche Katalysatortemperatur im zulässigen Bereich liegt.

Bei bisherigen Steuerungsverfahren ist es unumgänglich, daß die Motorsteuerung bei manchen Betriebszuständen unter Abweichung von für den Verbrauch und/oder die Leistung optimalen Steuerdaten geänderte Steuerdaten zum Schutz des Katalysators vor Übertemperatur an den Motor leitet. Erfindungsgemäß brauchen die Steuerdaten nicht mehr vorsorglich, sondern nur dann unter Abweichung von den optimalen Steuerdaten geändert zu werden, wenn die gemessene Temperatur des Katalysators sich tatsächlich einem vorgebbaren kritischen Wert nähert oder einen vorgebbaren Schwellwert überschreitet.

Die Verarbeitung der tatsächlichen Temperatur des Katalysators kann auch in der Kaltstartphase große Vorteile mit sich bringen. Um den Katalysator schnell auf Betriebstemperatur zu bringen, sind in der Motorsteuerung verschiedene Steuerabläufe vorgesehen, welche den Kraftstoffverbrauch erhöhen und unter Umständen den Fahrkomfort verringern. Durch direkte Messung und Verarbeitung der Temperatur des Katalysators kann diese Kaltstartphase genau auf das notwendige Maß begrenzt werden, da der Zeitpunkt des Erreichens der Starttemperatur des Katalysators direkt feststellbar ist. Sowohl eine für den Schadstoffausstoß ungünstige zu frühe Beendigung der Kaltstartphase wie auch eine für den Kraftstoffverbrauch ungünstige zu späte Beendigung können dadurch vermieden werden. Dies gilt besonders auch für den Wiederstart des Motors nach unterschiedlich langen Betriebsunterbrechungen.

Da die Temperatur in einem Katalysator im allgemeinen nicht gleichmäßig verteilt sein wird, wird die Aussagekraft einer Messung deutlich erhöht, wenn die Temperatur des Katalysators mittels eines integral messenden Temperaturfühlers gemessen wird, der über einen etwa repräsentativen Querschnitts-und/oder Längsschnittsbereich des Katalysators ausgedehnt ist. Als repräsentativ wird dabei eine Messung angesehen, die sowohl aus den Randbereichen der Strömung wie auch aus dem Zentralbereich Informationen enthält. Ein Querschnittsbereich ist dabei eine etwa in einer Querschnittsebene liegende Scheibe aus dem Abgassystem, in welcher die Messung durchgeführt wird. Ein Längsschnittsbereich ist entsprechend eine etwa in einer Längsschnittsebene liegende Scheibe aus dem Abgassystem. Repräsentative Bereiche können allerdings auch schräg oder diagonal verlaufende Meßebenen oder auch gewundene Wege eines linienförmigen Meßfühlers innerhalb des Katalysators sein.

Je nach den Anforderungen an die Genauigkeit der Temperaturmessung und weitere mit der vorliegenden Erfindung kombinierbare Meßsysteme ist es sinnvoll, Temperaturmeßwerte aus zwei oder mehreren Temperaturfühlern mittels einer Überwachungselektronik auszuwerten, die die Temperaturverteilung im Katalysator ermitteln und diese oder einen errechneten Maximalwert über eine Datenleitung an die Motorsteuerung weiterleiten kann. Falls zwei Temperaturfühler verwendet werden, so sollten diese bevorzugt in der Nähe der beiden Stirnseiten des Katalysators angeordnet werden.

Die erwähnte Überwachungselektronik kann gleichzeitig aus den Temperaturdaten die Funktionsfähigkeit und den Betriebszustand des Katalysators überwachen und das Ergebnis der Überwachung über eine Diagnoseleitung an eine Anzeige oder einen Datenspeicher weitergeben. Aus der Analyse der Temperaturverteilung im Katalysator und des zeitlichen Verhaltens der Temperatur können Aussagen über die Funktionsfähigkeit des Katalysators, die noch vorhandene Umsetzungsrate und die voraussichtliche weitere Lebensdauer des Katalysators gewonnen werden.

Besonders genau wird die Katalysatorüberwachung, wenn der Überwachungselektronik zur Bestimmung des Zustandes und/oder der Temperaturverteilung im Katalysator über Datenzuleitungen Daten der Motorsteuerung, z. B. Drehzahl, Ansaugdruck, Kraftstoffzufuhr etc., zur Verfügung stehen, da daraus die Strömungsgeschwindigkeit im Abgassystem und andere wichtige Größen berechenbar sind.

Für den Fall, daß für besonders schadstoffarme Kraftfahrzeuge als Katalysator ein in an sich bekannter Weise elektrisch beheizbarer Katalysator Verwendung findet, kann die für die obigen Zwecke gemessene Temperatur des Katalysators zusätzlich zur Regelung der elektrischen Beheizung herangezogen werden, um den Katalysator schnellstmöglich und dauernd während des Betriebes auf einer für die Schadstoffumsetzung notwendigen Mindesttemperatur zu halten.

Als geeigneteste Ausführung der Erfindung wird es angesehen, daß die Motorsteuerung den Motor zunächst ohne Berücksichtigung der Temperatur des Katalysators steuert und die Steuerdaten erst bei Erreichen einer kritischen Temperatur des Katalysators so modifiziert, daß die Katalysatortemperatur nicht weiter steigt, was beispielsweise durch Veränderung des Verhältnisses von Brennstoff und Luft und/oder Änderung des Zündzeitpunktes erfolgen kann. Zusätzlich können Kühlungsmaßnahmen für den Abgasweg oder den Katalysator eingeleitet werden.

Weiter kann das zeitliche Verhalten der Temperatur des Katalysators in Bezug auf verschiedene Abläufe in der Motorsteuerung überwacht und daraus auf anormale Betriebszustände des Motors, beispielsweise Zündaussetzer geschlossen werden. Manche Motorsteuerungen haben sogenannte Notlaufprogramme, welche bei anormalen Betriebszuständen größere Schäden am Fahrzeug verhindern sollen, aber die Möglichkeit für kurze weitere Fahrten erhalten. Die Wirkung solcher verschiedener Notlaufprogramme auf die Temperatur des Katalysators kann durch die schnelle Reaktion von Temperaturfühlern innerhalb kurzer Zeit festgestellt werden, wodurch ein zur Vermeidung von Schäden am Katalysator geeignetes Notlaufprogramm ausgewählt werden kann. Hat beispielsweise nur ein Zylinder Zündaussetzer, so gibt es Notlaufprogramme, welche die Kraftstoffzufuhr für diesen Zylinder sperren. Beispielsweise durch kurzzeitiges jeweils einzelnes Abschalten der Kraftstoffzufuhr für einzelne Zylinder und die darauf erfolgende Reaktion der Temperatur im Katalysator kann der für die Zündaussetzer verantwortliche Zylinder ermittelt und dessen Kraftstoffzufuhr abgeschaltet werden.

Zur Lösung der gestellten Aufgabe dient auch eine Vorrichtung zur Temperaturüberwachung eines aus gewickelten, geschichteten oder verschlungenen Blechlagen aufgebauten Katalysators für Abgase eines Verbrennungsmotors und zur Steuerung des Verbrennungsmotors, enthaltend:
a) einen Katalysator mit mindestens einem mit dessen metallischen Katalysatortrager-Wanden innig verbundenen, parallel zu den einzelnen Blechlagen verlaufenden und mit diesen gewickelten, geschichteten oder verschlungenen Temperaturfühler zur Messung der tatsächlichen Temperatur der Katalysatortrager-Wande.
b) eine Motorsteuerung, welche eine Vielzahl von über Meßleitungen zugeführten Meßdaten in Steuerdaten für den Betrieb des Motors umwandelt und über Motorzuleitungen an den Motor weiterleitet;
c) mindestens eine Datenleitung, über welche der Motorsteuerung direkt oder nach vorheriger Verarbeitung tatsächliche Temperaturmeßwerte der Katalysatortrager-Wande zuführbar sind. Ein wesentliches erfindungsgemäßes Element ist die Zuführung von Daten aus dem Katalysator in die Motorsteuerung, wodurch die Anwendung des oben beschriebenen erfindungsgemäßen Verfahrens erst möglich wird. Man muß sich nicht mehr lediglich auf die Überwachung und Diagnose des Zustandes des Katalysators beschränken, obwohl beides weiterhin möglich bleibt, sondern kann durch Verarbeitung der Temperatur des Katalysators in der Motorsteuerung einerseits den Zustand des Katalysators beeinflussen, andererseits für einen Schutz des Katalysators unnötige Einschränkungen, die sonst aus Sicherheitsgründen erforderlich wären, so lange vermeiden, wie der Katalysator tatsächlich nicht in einem kritischen Temperaturbereich ist.

Günstig ist es, wenn in dem Katalysator mindestens zwei Temperaturfü.iler angeordnet sind, da dann genauere Aussagen über die Temperaturverteilung im Katalysator möglich sind und zusätzliche Informationen für eine Diagnose zur Verfügung stehen.

In diesem Zusammenhang ist es sinnvoll, eine Überwachungselektronik zwischenzuschalten, welche die Temperaturmeßwerte aus dem Katalysator elektronisch verarbeitet und erst dann über die Datenleitung an die Motorsteuerung weiterleitet. Die Überwachungselektronik kann zusätzlich die Überwachung und Diagnose bezüglich des Katalysatorzustandes übernehmen.

Für die Genauigkeit der Messung ist es von Vorteil, wie anhand der zeichnung näher erläutert wird, wenn der oder die Temperaturfühler flächig oder etwa linienförmig ausgebildet sind, um repräsentative Meßergebnisse zu erzielen. Insbesondere ist es günstig, wenn die Temperaturfühler über einen etwa repräsentativen Teil eines Querschnittsbereiches des Katalysators ausgedehnt sind.

Eine teilweise schematische Übersichtsdarstellung und Ausführungsbeispiele für Einzelheiten der vorliegenden Erfindung sind in der Zeichnung dargestellt. Es zeigen
Figur 1 eine schematische Übersicht über ein erfindungsgemäßes Motorsteuerungs- und Katalysatorüberwachungssystem,
Figur 2 ein Ausführungsbeispiel für einen Querschnitt durch einen erfindungsgemäß ausgestalteten Katalysator in der Ebene eines Temperaturfühlers,
Figuren 3 und 4 den Aufbau eines geeigneten Temperaturfühlers im Längsschnitt (Figur 3) und im Querschnitt (Figur 4) und Figur 5 ein schematisches Beispiel für die fertigungstechnische Einbindung eines Temperaturfühlers in einen Katalysatorkörper.

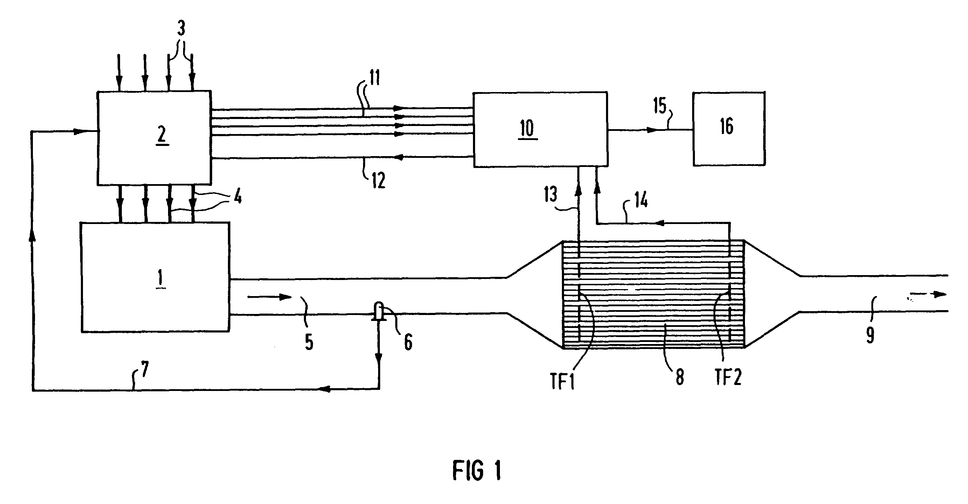

Figur 1 zeigt schematisch einen Verbrennungsmotor 1 mit einer elektronischen Motorsteuerung 2, wobei in der vorliegenden Beschreibung mit Motor immer der Motor und seine sämtlichen Zusatzaggregate wie Zündung, Kraftstoffeinspritzung, Luftzufuhr, mit Ausnahme der Meßeinrichtungen und Motorsteuerung, gemeint sind. Über Meßwertzuleitungen 3 erhält die Motorsteuerung 2 Informationen von außen und ermittelt daraus Steuerdaten, die über Motorzuleitungen 4 dem Motor 1 zugeführt werden. Aus dem Motor 1 gelangen Abgase in Pfeilrichtung in eine Abgasleitung 5, in welcher eine Lambdasonde 6 angeordnet ist, welche wiederum über eine Meßwertleitung 7 mit der Motorsteuerung 2 in Verbindung steht. In der Abgasleitung ist ein Katalysator 8 angeordnet, an den sich eine Abgasauslaßleitung 9 anschließt. Der Katalysator 8 kann aus einer oder mehreren einzelnen Scheiben bestehen und natürlich kann das Abgassystem auch mehrsträngig aufgebaut sein, was jedoch für die vorliegende Erfindung beides keine entscheidende Rolle spielt. Der Katalysator 8 kann auch zumindest in Teilbereichen elektrisch beheizbar sein und dementsprechende elektrische Anschlüsse aufweisen. Wichtig für die vorliegende Erfindung ist, daß der Katalysator Temperaturfühler TF1, TF2 aufweist, welche über Meßleitungen 13, 14 mit einer Überwachungselektronik 10 verbunden sind. Prinzipiell könnten die Temperaturmeßwerte von den Temperaturfühlern TF1, TF2 auch direkt an die Motorsteuerung 2 weitergeleitet werden, jedoch wird im vorliegenden Ausführungsbeispiel eine vorherige Verarbeitung in der Überwachungselektronik 10 bevorzugt. Diese Überwachungselektronik 10 kann aus den Temperaturmeßwerten eine Temperaturverteilung im Katalysator und/oder einen Mittelwert und/oder einen Maximalwert ermitteln und über eine Datenleitung 12 an die Motorsteuerung 2 weiterleiten. Zusätzlich kann die Überwachungselektronik 10 aus den Meßdaten im Katalysator 8 und gegebenenfalls aus über Datenzuleitungen 11 zugeführten Daten der Motorsteuerung 2 auch die Funktionsfähigkeit des Katalysators 8 überwachen und das Ergebnis dieser Überwachung über eine Diagnoseleitung 15 an eine Anzeige 16 oder einen Speicher weitergeben.

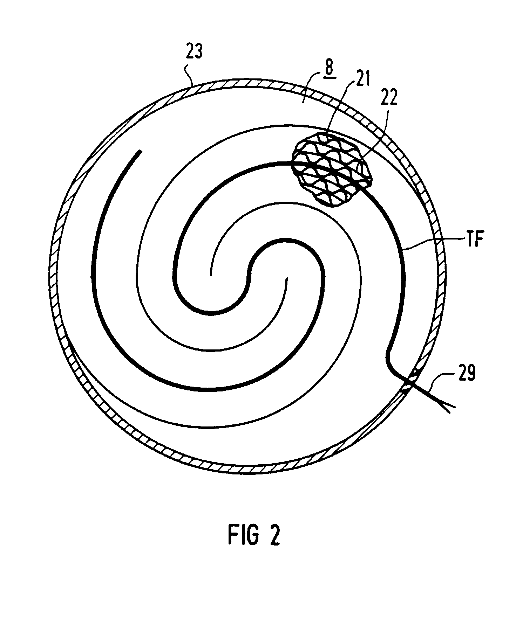

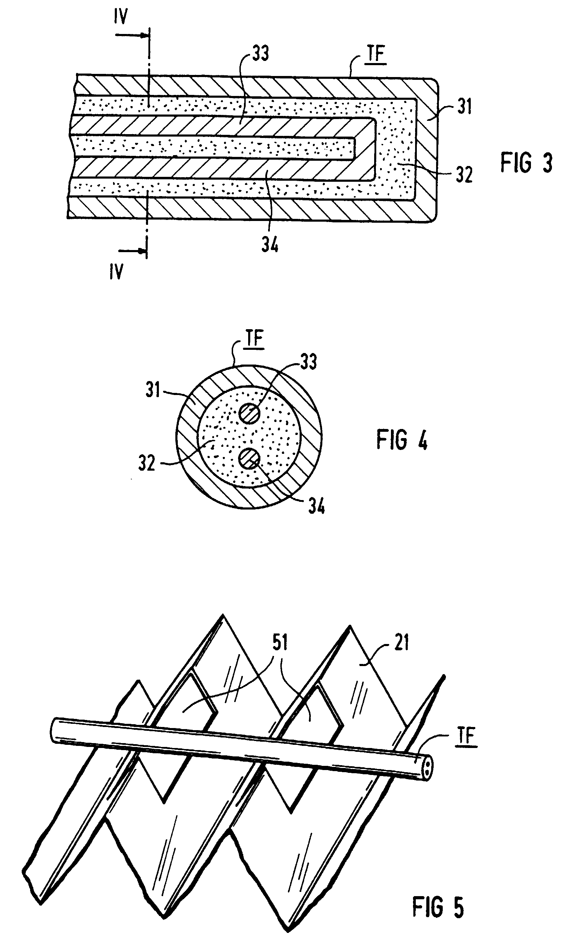

Figur 2 veranschaulicht in einem teilweise schematisch dargestellten Schnitt durch den Katalysator 8 in der Ebene eines Temperaturfühlers TF ein mögliches Ausführungsbeispiel eines Katalysators mit integriertem Temperaturfühler. Bei Figur 2 handelt es sich um eine an sich aus der EP-B-0 245 737 bekannte Anordnung. Dieser Katalysator 8 ist aus abwechselnden Lagen gewellter 21 und glatter Bleche 22 aufgebaut. Die Blechlagen sind von einem Mantel 23 umgeben. Im Inneren dieses Katalysators 8 verläuft nun parallel zu den einzelnen Blechlagen ein Temperaturfühler TF, der im vorliegenden Ausführungsbeispiel einen Draht enthält, dessen Widerstand sich mit der Temperatur ändert. Um nicht zwei Anschlüsse für den Temperaturfühler an verschiedenen Stellen vorsehen zu müssen, ist der Widerstandsdraht im Inneren U-förmig verlegt, d. h. er besteht aus am Ende verbundener Hin- und Rückleitung, wie dies in den Figuren 3 und 4 veranschaulicht wird. Der Temperaturfühler TF ist an einer Seite durch den Mantel 23 nach außen geführt und weist dort Anschlüsse 29 für die Meßleitungen auf. Das hier dargestellte Prinzip zur Verlegung eines Temperaturfühlers TF in einem Katalysator 8 ist nur ein Ausführungsbeispiel. Viele andere Möglichkeiten für anders aufgebaute Katalysatoren sind denkbar, insbesondere das spiralige Aufwickeln eines Temperaturfühlers. Auch kann für viele Fälle auf die Verwendung eines U-förmigen Widerstandsdrahtes verzichtet werden, wenn man einen metallischen Mantel des Temperaturfühlers als Rückleitung, d. h. als Masse, benutzt und den Widerstandsdraht an einem Ende mit dem Mantel verbindet.

Figur 3 zeigt zur Veranschaulichung einen Längsschnitt durch das Ende des Temperaturfühlers TF, und in Figur 4 ist ein Querschnitt entlang der Linie IV-IV in Figur 3 dargestellt. Der Temperaturfühler TF hat einen Mantel 31, welcher beispielsweise aus Inconel oder einem anderen hochtemperaturfesten Stahl mit Chrom- und/oder Aluminium-Anteilen bestehen kann. Je nach den Anforderungen kann der Mantel 31 auch aus dem gleichen Material bestehen wie die Bleche des Katalysators 8, wodurch eine Verlötung zwischen Temperaturfühler TF und Blechen 21, 22 bzw. dem Mantel 23 problemlos möglich wird. Im Inneren des Temperaturfühlers TF ist ein Draht 33, 34 U-förmig verlegt, wobei der Draht beispielsweise aus Nickel oder einem anderen Material bestehen kann, welches einen stark von der Temperatur abhängigen Widerstand aufweist. Eine Isolierschicht 32, z. B. aus Magnesiumoxidpulver, verhindert in bekannter Weise Kontakte zwischen den beiden Leitungen 33, 34 des Widerstandsdrahtes untereinander und zu dem Mantel 31.

Figur 5 zeigt zur Veranschaulichung einen kleinen Ausschnitt aus einem gewellten bzw. im vorliegenden Fall gefalteten Blech, wie es zum Aufbau von Katalysator-Trägerkörpern verwendet wird. Durch eine geeignete Nut quer zum Verlauf der Struktur in die Wellenberge kann eine Aufnahme für einen Temperaturfühler TF geschaffen werden, die es ermöglicht, den Temperaturfühler zusammen mit dem strukturierten Blech 21 zu einem Katalysator-Trägerkörper zu schichten bzw. zu wickeln oder zu verschlingen. Die Nut 51 sollte dabei nicht wie hier zur Veranschaulichung dargestellt wesentlich größer als der Querschnitt des Temperaturfühlers sein, sondern etwa dessen Abmessungen haben, so daß eine Einlötung oder zumindest eine Fixierung des Temperaturfühlers TF durch die Nut möglich ist. Durch eine geringe Tiefe der Nut 51 und eine Verlötung oder andere innige Verbindung mit dem angrenzenden nächsten glatten Blech wird erreicht, daß der Temperaturfühler TF hauptsächlich die Temperatur der Trägerstruktur mißt.

Die vorliegende Erfindung eignet sich besonders für fortschrittliche integrale Diagnose- und Überwachungs- und Steuerungssysteme bei Kraftfahrzeugen, die Verbrennungsmotoren mit elektronischer Einspritzung aufweisen und mit geregelten Katalysatoren ausgestattet sind. Günstig ist die Erfindung auch anwendbar in Verbindung mit elektrisch beheizbaren Katalysatoren. Die Zeiten in denen ein Verbrennungsmotor unter für den Verbrauch von Kraftstoff nicht optimalen Bedingungen betrieben werden muß, werden ohne Risiko für den Katalysator verkürzt und damit der Kraftstoffverbrauch verringert.

## Patentansprüche

1. Verfahren zur Steuerung eines Verbrennungsmotors (1) mit einer Motorsteuerung (2), welche eine Vielzahl von Meßwerten über Meßleitungen (3) erhält und verarbeitet, in Steuerdaten für den Betrieb des Motors (1) umwandelt und über Motorzuleitungen (4) an den Motor (1) weiterleitet, z. B. zur Steuerung der Kraftstoffeinspritzung, der Luftzufuhr, der Zündung etc., dadurch gekennzeichnet, daß die tatsächliche Temperatur der metallischen Katalysatorträger-Wände (21, 22) eines dem Motor (1) nachgeschalteten aus gewickelten, geschichteten oder verschlungenen Blechlagen (21, 22) aufgebauten Katalysators (8) mittels mindestens eines parallel zu den einzelnen Blechlagen (21, 22) verlaufenden, mit diesen gewickelten, geschichten oder verschlangenen und innig mit diesen verbundenen Temperaturfühlers (TF;TF1;TF2) direkt gemessen, der Motorsteuerung (2) direkt oder nach vorheriger Verarbeitung über mindestens eine Datenleitung (12) zugeführt und dort zusammen mit den anderen Meßwerten verarbeitet wird.

2. Verfahren nach Anspruch 1, wobei die Motorsteuerung (2) bei manchen Betriebszuständen unter Abweichung von für den Verbrauch und/oder die Leistung optimalen Steuerdaten geänderte Steuerdaten zum Schutz des Katalysators (8) vor Übertemperatur an den Motor (1) leitet, dadurch gekennzeichnet, daß die Steuerdaten nicht vorsorglich, sondern nur dann unter Abweichung von den optimalen Steuerdaten geändert werden, wenn die gemessene tatsächliche der metallischen Katalysatorträger-Wände (21,22) Temperatur sich tatsächlich einem vorgebbaren kritischen Wert nähert oder einen vorgebbaren Schwellwert überschreitet.

3. Verfahren nach Anspruch 1 oder 2, dadurch gekennzeichnet, daß die tätsachliche Temperatur der metallischen Katalysatorträger-Wände (21,22) mittels eines Temperaturfühlers (TF; TF1; TF2) gemessen wird, der über einen etwa repräsentativen Bereich, insbesondere Querschnitts- und/oder Längsschnittsbereich, des Katalysators (8) ausgedehnt ist.

4. Verfahren nach Anspruch 1, 2 oder 3, dadurch gekennzeichnet, daß aus zwei oder mehreren Temperaturfühlern (TF1, TF2) mittels einer Überwachungselektronik (10) die Temperaturverteilung in dem Katalysator (8) ermittelt und diese oder ein errechneter Maximalwert über eine Datenleitung (12) an die Motorsteuerung (2) weitergeleitet werden.

5. Verfahren nach Anspruch 4, dadurch gekennzeichnet, daß die Überwachungselektronik (10) aus den Temperaturmeßdaten gleichzeitig die Funktionsfähigkeit und den Betriebszustand des Katalysators (8) überwacht und das Ergebnis der Überwachung über eine Diagnoseleitung (15) an eine Anzeige (16) oder einen Datenspeicher weitergibt.

6. Verfahren nach Anspruch 4 oder 5, dadurch gekennzeichnet, daß der Überwachungselektronik (10) zur Bestimmung des Zustandes und/oder der Temperaturverteilung im Katalysator (8) über Datenzuleitungen (11) Daten der Motorsteuerung (2), z. B. Drehzahl, Ansaugdruck, Kraftstoffzufuhr etc., zur Verfügung stehen.

7. Verfahren nach einem der vorhergehenden Ansprüche, wobei der Katalysator (8) ein in an sich bekannter Weise elektrisch beheizbarer Katalysator ist, dadurch gekennzeichnet, daß die gemessene Temperatur der Katalysatorträger-Wände (21,22) zur Regelung der elektrischen Beheizung zusätzlich verarbeitet wird.

8. Verfahren nach einem der vorhergehenden Ansprüche, dadurch gekennzeichnet, daß die Motorsteuerung (2) erst bei Erreichen einer kritischen Temperatur der Katalysatorträger-Wände (21,22), die Steuerung des Motors (1) so modifiziert, daß die Katalysatortemperatur nicht weiter steigt, beispielsweise durch Veränderung des Verhältnisses von Brennstoff und Luft oder Zurücknahme des Zündzeitpunktes etc.

9. Verfahren nach einem der vorhergehenden Ansprüche, dadurch gekennzeichnet, daß das zeitliche Verhalten der tatsächlichen Temperatur der Katalysatorträger-Wände (21,22) überwacht und daraus auf anormale Betriebszustände des Motors (1), beispielsweise Zündaussetzer, geschlossen wird.

10. Vorrichtung zur Temperaturüberwachung eines aus gewickelten, geschichteten oder verschlungenen Blechlagen (21,22) aufgebauten Katalysators (8) für Abgase eines Verbrennungsmotors (1) und zur Steuerung des Verbrennungsmotors (1), enthaltend:
a) einen Katalysator (8) mit mindestens einem mit dessen metallischen Katalysatorträger-Wänden (21, 22) innig verbundenen, parallel zu den einzelnen Blechlagen (21, 22) verlaufenden und mit diesen gewickelten, geschichteten oder verschlungenen Temperaturfühler (TF; TF1, TF2), zur Messung der tatsächlichen Temperatur der Katalysator-Trägerwände (21,22),
b) eine Motorsteuerung (2), welche eine Vielzahl von über Meßleitungen (3, 7) zugeführten Meßdaten in Steuerdaten für den Betrieb des Motors (1) umwandelt und über Motorzuleitungen (4) an den Motor (1) weiterleitet;
c) mindestens eine Datenleitung (12), über welche der Motorsteuerung (2) direkt oder nach vorheriger Verarbeitung tatsächliche Temperaturmeßwerte der Katalysatorträger-Wände (21,22) zuführbar sind.

11. Vorrichtung nach Anspruch 10, dadurch gekennzeichnet, daß in dem Katalysator (8) mindestens zwei Temperaturfühler (TF1, TF2) angeordnet sind.

12. Vorrichtung nach Anspruch 10 oder 11, dadurch gekennzeichnet, daß eine Überwachungselektronik (10) vorhanden ist, welche die tatsächlichen Temperaturmeßwerte der metallischen Katalysatorträger-Wände (21,22) elektronisch verarbeitet und erst dann über die Datenleitung (12) an die Motorsteuerung (2) weiterleitet.

## Claims

1. A method of controlling an internal combustion engine (1) having an engine management system (2) which receives a plurality of measurement values by way of measurement lines (3) and processes them. converts them into management data for operation of the engine (1) and passes them to the engine (1) by way of engine feed lines (4), for example for controlling fuel injection, the supply of air, ignition etc., characterised in that the actual temperature of the metal catalyst carrier walls (21, 22) of a catalytic converter (8) which is connected downstream of the engine (1) and which is constructed from wound, stacked or twisted sheet metal layers (21, 22) is directly measured by means of at least one temperature sensor (TF; TF1; TF2) which extends parallel to the individual sheet metal layers (21, 22) and which is wound. stacked or twisted with them and which is intimately connected to them, fed to the engine management system (2) directly or after previous processing by way of at least one data line (12) and processed there together with the other measurement values.

2. A method according to claim 1 wherein in many operating conditions, involving a deviation from management data which are optimum in terms of consumption and/or power, the engine management system (2) passes modified management data to the engine (1) to protect the catalytic converter (8) from excessive temperature, characterised in that the management data are modified not as a precaution but only when, involving a deviation from the optimum management data, the measured actual temperature of the metal catalyst carrier walls (21, 22) actually approaches a predeterminable critical value or exceeds a predeterminable threshold value.

3. A method according to claim 1 or claim 2 characterised in that the actual temperature of the metal catalyst carrier walls (21, 22) is measured by means of a temperature sensor (TF; TF1; TF2) which is extended over a substantially representative region, in particular a cross-sectional region and/or a longitudinal-sectional region, of the catalytic converter (8).

4. A method according to claim 1, claim 2 or claim 3 characterised in that the temperature distribution in the catalytic converter (8) is ascertained from two or more temperature sensors (TF1, TF2) by means of an electronic monitoring system (10) and said temperature distribution or a calculated maximum value is passed to the engine management system (2) by way of a data line (12).

5. A method according to claim 4 characterised in that electronic monitoring system (10) simultaneously monitors from the temperature measurement data the operability and the operating condition of the catalytic converter (8) and passes the result of the monitoring operation by way of a diagnosis line (15) to a display (16) or a data store.

6. A method according to claim 4 or claim 5 characterised in that data from the engine management system (2), for example speed of rotation, induction pressure, fuel feed etc. are available to the electronic monitoring system (10) by way of data feed lines (11) for determining the condition and/or the temperature distribution in the catalytic converter (8).

7. A method according to one of the preceding claims wherein the catalytic converter (8) is a catalytic converter which is electrically heatable in per se known manner, characterised in that the measured temperature of the catalyst carrier walls (21, 22) is additionally processed for regulating the electrical heating.

8. A method according to one of the preceding claims characterised in that the engine management system (2) so modifies the control of the engine (1) only when a critical temperature of the catalyst carrier walls (21, 22) is reached that the catalytic converter temperature does not rise further, for example by modifying the ratio of fuel and air or retarding the ignition timing etc.

9. A method according to one of the preceding claims characterised in that the variation in respect of time of the actual temperature of the catalyst carrier walls (21, 22) is monitored and abnormal operating conditions of the engine (1), for example misfires, are inferred therefrom.

10. Apparatus for the temperature monitoring of a catalytic converter (8) which is constructed from wound, stacked or twisted sheet metal layers (21, 22), for exhaust gases of an internal combustion engine (1), and for control of the internal combustion engine (1), including:
(a) a catalytic converter (8) having at least one temperature sensor (TF; TF1, TF2) which is intimately connected to the metal catalyst carrier walls (21, 22) of the catalytic converter (8) and which extends parallel to the individual sheet layers (21, 22) and which is wound, stacked or twisted with them. for measurement of the actual temperature of the catalyst carrier walls (21, 22);
(b) an engine management system (2) which converts a plurality of measurement data supplied by way of measurement lines (3, 7) into management data for operation of the engine (1) and passes them to the engine (1) by way of engine feed lines (4); and
(c) at least one data line (12) by way of which actual temperature measurement values of the catalyst carrier walls (21, 22) can be fed to the engine management system (2) directly or after previous processing.

11. Apparatus according to claim 10 characterised in that at least two temperature sensors (TF1, TF2) are arranged in the catalytic converter (8).

12. Apparatus according to claim 10 or claim 11 characterised in that there is provided an electronic monitoring system (10) which electronically processes the actual temperature measurement values of the metal catalyst carrier walls (21, 22) and only then passes them to the engine management system (2) by way of the data line (12).

## Revendications

1. Procédé destiné à la commande d'un moteur à combustion interne (1) comportant une commande (2) de moteur qui, par l'intermédiaire de lignes de mesure (3), reçoit et traite une pluralité de valeurs de mesure, les convertit en données de commande pour le fonctionnement du moteur (1), et les transmet au moteur (1) par l'intermédiaire de lignes d'alimentation (4) du moteur, par exemple pour la commande de l'injection du carburant, de l'alimentation en air, de l'allumage etc., caractérisé en ce que la température réelle des parois métalliques (21, 22) de support d'un catalyseur (8) disposé en aval du moteur (1), constitué de couches de tôles (21, 22) enroulées, empilées ou entrelacées, est mesurée directement au moyen d'au moins un capteur de température (TF ; TF1 ; TF2) s'étendant parallèlement aux différentes couches de tôles (21, 22), qui est enroulé, empilé ou entrelacé, et relié étroitement à ces dernières, transmise directement ou après un traitement préalable par l'intermédiaire d'au moins une ligne de transmission de données (12) à la commande (2) du moteur, et traitée par cette dernière avec les autres valeurs de mesure.

2. Procédé suivant la revendication 1, selon lequel la commande (2) du moteur transmet au moteur (1) dans certains états de fonctionnement des données de commande modifiées, qui sont différentes des données de commande optimales pour la consommation et/ou la puissance afin de protéger le catalyseur (8) contre une température excessive, caractérisé en ce que les données de commande ne sont pas modifiées à titre préventif par rapport aux données de commande optimales, mais uniquement lorsque la température réelle mesurée des parois métalliques (21, 22) du support de catalyseur s'approche effectivement d'une valeur critique, ou dépasse une valeur de seuil pouvant être prescrite.

3. Procédé suivant la revendication 1 ou 2, caractérisé en ce que la température réelle des parois métalliques (21, 22) du support de catalyseur est mesurée au moyen d'un capteur de température (TF ; TF1 ; TF2) qui s'étend sur une zone sensiblement représentative, notamment une zone en section transversale et/ou en coupe longitudinale du catalyseur (8).

4. Procédé suivant la revendication 1, 2 ou 3, caractérisé en ce que la répartition de température dans le catalyseur (8) est déterminée à partir de deux ou de plusieurs capteurs de température (TF1, TF2) au moyen d'une électronique de surveillance (10), et en ce que celle-ci ou une valeur maximale calculée est transmise à la commande (2) du moteur par l'intermédiaire d'une ligne de transmission de données (12).

5. Procédé suivant la revendication 4, caractérisé en ce qu'à partir des données de mesure de température, l'électronique de surveillance (10) surveille simultanément la capacité de fonctionnement et l'état de marche du catalyseur (8), et transmet le résultat de la surveillance à un affichage (16) ou à une mémoire de données par l'intermédiaire d'une ligne de diagnostic (15).

6. Procédé suivant la revendication 4 ou 5, caractérisé en ce que pour déterminer l'état et/ou la répartition de température dans le catalyseur (8),des données de la commande (2) du moteur, par exemple la vitesse de rotation, la pression d'aspiration, l'alimentation en carburant etc., sont mises à disposition de l'électronique de surveillance (10) par l'intermédiaire de lignes d'alimentation de données (11).

7. Procédé suivant l'une quelconque des revendications précédentes, le catalyseur (8) étant un catalyseur pouvant être chauffé électriquement de la manière connue en soi, caractérisé en ce que la température mesurée des parois (21, 22) du support de catalyseur est en outre traitée pour la régulation du chauffage électrique.

8. Procédé suivant l'une quelconque des revendications précédentes, caractérisé en ce que la commande (2) du moteur ne modifie la commande du moteur (1), par exemple par une modification du rapport de carburant et d'air, ou par un retard du point d'allumage etc., que lorsque les parois (21, 22) du support de catalyseur ont atteint une température critique, de telle sorte que la température du catalyseur ne continue pas à augmenter.

9. Procédé suivant l'une quelconque des revendications précédentes, caractérisé en ce que le comportement dans le temps de la température réelle des parois (21, 22) du support de catalyseur est surveillé, et qu'à partir de là est tirée une conclusion quant à des états de fonctionnement anormaux du moteur (1), par exemple des ratés d'allumage.

10. Dispositif destiné à la surveillance de température d'un catalyseur (8) de gaz d'échappement d'un moteur à combustion interne (1), constitué de couches de tôles (21, 22) enroulées, empilées ou entrelacées, et à la commande du moteur à combustion interne (1), comportant :
a) un catalyseur (8) avec au moins un capteur de température (TF ; TF1, TF2) pour la mesure de la température réelle des parois (21, 22) de support du catalyseur, lequel est relié étroitement aux parois métalliques (21, 22) de support du catalyseur, qui s'étend parallèlement aux différentes couches de tôles (21, 22), et est enroulé, empilé ou entrelacé avec celles-ci ;
b) une commande (2) de moteur, qui convertit une pluralité de données de mesure transmises par l'intermédiaire de lignes de mesure (3, 7) en données de commande pour le fonctionnement du moteur (1), et les transmet au moteur (1) par l'intermédiaire de lignes d'alimentation (4) du moteur ;
c) au moins une ligne de transmission de données (12), par l'intermédiaire de laquelle des valeurs réelles de mesure de température des parois (21, 22) de support du catalyseur peuvent être transmises directement, ou après un traitement préalable, à la commande (2) du moteur.

11. Dispositif suivant la revendication 10, caractérisé en ce qu'au moins deux capteurs de température (TF1, TF2) sont disposés dans le catalyseur (8).

12. Dispositif suivant la revendication 10 ou 11, caractérisé en ce qu'il est prévu une électronique de surveillance (10) qui traite par voie électronique les valeurs de mesure de température des parois (21, 22) de support du catalyseur, et ne les transmet qu'ensuite à la commande (2) du moteur par l'intermédiaire de la ligne de transmission de données (12).
